# EUROPEAN PATENT APPLICATION

(11) **EP 4 468 382 A1**
(43) Date of publication of application: **27.11.2024**
(21) Application number: 23907492.5
(22) Date of filing: 30.11.2023
(51) Int. Cl.: H01M 4/04, H01M 4/66, B05B 7/14, B05D 3/14

(54) **ELECTRODE SURFACE TREATMENT DEVICE AND ELECTRODE COATING SYSTEM INCLUDING SAME**

(30) Priority: 20.12.2022 KR 20220178976; 03.03.2023 KR 20230028739
(71) Applicant: LG Energy Solution, Ltd., Seoul 07335 (KR)
(72) Inventor: MOON, Jae-Won, Daejeon 34122 (KR); PAENG, Ki-Hoon, Daejeon 34122 (KR); JEONG, Yeon-Beom, Daejeon 34122 (KR)
(74) Representative: Goddar, Heinz J.
(86) International application number: PCT/KR2023/019551
(87) International publication number: WO 2024/136206

(57) **Abstract**

An electrode surface treatment device according to an embodiment of the present disclosure includes: a guide roll configured to come into contact with and support electrode foil moving in a machine direction, thereby guiding movement of the electrode foil; and a plasma unit configured to perform surface treatment on the electrode foil by spraying plasma onto the electrode foil while the electrode foil is being moved.

## Description

### TECHNICAL FIELD

The present application claims priority to Korean Patent Application No. 10-2022-0178976 filed on December 20, 2022 and Korean Patent Application No. 10-2023-0028739 filed on March 03, 2023 in the Republic of Korea, the disclosures of which are incorporated herein by reference.

The present disclosure relates to an electrode surface treatment device and an electrode coating system including the same, and more specifically, it relates to an electrode surface treatment device that performs surface treatment on electrode foil to which a coating material including an electrode active material is to be applied, and an electrode coating system including the same.

### BACKGROUND ART

In general, secondary batteries indicate batteries capable of being repeatedly charged and discharged, such as lithium-ion batteries, lithium-polymer batteries, nickelcadmium batteries, nickel-hydrogen batteries, nickel-zinc batteries, and the like. These secondary batteries may be manufactured by storing an electrode assembly including a positive electrode and a negative electrode stacked with a separator therebetween and an electrolyte material in a case in various shapes, and sealing the case.

Electrodes such as the positive or negative electrodes of secondary batteries may be classified into wet electrodes or dry electrodes depending on their manufacturing method. Wet electrodes are manufactured through a process of forming a coating layer by applying an electrode mixture in a slurry state containing a solvent to the surface of electrode foil corresponding to a collector and then drying the coating layer. On the other hand, dry electrodes are manufactured through a process of forming a coating layer by pressing a solid electrode mixture that does not contain a solvent onto the surface of electrode foil.

These days, research and development on technology for manufacturing dry electrodes capable of replacing wet electrodes is increasing in consideration of the problems in which the solvent contained in the electrode mixture of the wet electrode produces harmful gases during the drying process and in which wrinkles, pinholes, and cracks occur in the coating layer of the wet electrode after the solvent is dried.

However, since foreign substances such as rolling oil exist on the surface of the electrode foil, which corresponds to the electrode collector, it is difficult to attach the electrode mixture thereto. This problem is more severe in the dry electrode to which solid-state electrode mixtures are attached than in the wet electrode to which slurry-state electrode mixtures are attached.

In addition, in order to increase the adhesion of the electrode foil, the electrode foil is cleaned, and then coated with a primer containing a conductive material and a binder on the entire or partial surface of the electrode foil in the existing technology, so that much time and cost is required to manufacture the electrode foil.

### DISCLOSURE

### Technical Problem

The present disclosure has been designed to solve the problems of the related art, and therefore the present disclosure is directed to providing an electrode surface treatment device capable of improving the quality of electrodes by strengthening the adhesion between electrode foil and electrode mixtures, and an electrode coating system including the same.

The present disclosure also provides an electrode surface treatment device capable of shortening the manufacturing time of the electrode and reducing manufacturing costs thereof while increasing the electrical capacity and energy density of the electrode, and an electrode coating system including the same.

### Technical Solution

According to one aspect of the present disclosure, there is provided an electrode surface treatment device including: a guide roll configured to come into contact with and support electrode foil moving in a machine direction, thereby guiding movement of the electrode foil; and a plasma unit configured to perform surface treatment on the electrode foil by spraying plasma onto the electrode foil while the electrode foil is being moved.

In an embodiment, the plasma unit may be configured to spray plasma onto a portion of the electrode foil, which is in contact with and supported by the guide roll.

In an embodiment, a plurality of plasma units may be provided, and the plurality of plasma units may be configured to be arranged in a transverse direction and to spray plasma onto the electrode foil, respectively.

In an embodiment, a plurality of guide rolls may be provided, and the plurality of guide rolls may include: a first guide roll that is in contact with the lower surface of the upper and lower surfaces of the electrode foil and supports the electrode foil; and a second guide roll that is in contact with the upper surface of the electrode foil and supports the electrode foil.

In an embodiment, a plurality of plasma units may be provided, and the plurality of plasma units may include: at least one first plasma unit that sprays plasma onto a first portion of the electrode foil, which is in contact with and supported by the first guide roll; and at least one second plasma unit that sprays plasma onto a second portion of the electrode foil, which is in contact with and supported by the second guide roll.

In an embodiment, the guide roll may have a hollow therein, and the plasma unit may be disposed in the hollow of the guide roll.

In an embodiment, the guide roll may have a through-hole provided on an outer surface of the guide roll to communicate with the hollow, and the plasma unit may be configured to spray plasma onto a surface of the electrode foil through the through-hole.

In an embodiment, the through-hole may be configured in the form of a long hole or slit that extends in a transverse direction and has a predetermined width.

In an embodiment, an extension length of the through-hole extending in the transverse direction may be less than a width of the electrode foil.

In an embodiment, a plurality of the guide rolls and a plurality of plasma units may be provided, and at least one first plasma unit among the plurality of plasma units may be disposed in a hollow of a first guide roll among the plurality of guide rolls, and at least one second plasma unit among the plurality of plasma units may be disposed in a hollow of a second guide roll among the plurality of guide rolls.

In an embodiment, the electrode surface treatment device may further include an unwinder configured to unwind the electrode foil wound in a roll to be moved in the machine direction, and the guide roll may be configured to guide the electrode foil moved by the unwinder.

In an embodiment, the electrode foil may be made of a material including aluminum.

An electrode coating system according to another aspect of the present disclosure includes: the electrode surface treatment device according to any one of the embodiments described above; and a coating device configured to form a coating layer on a surface of the electrode foil processed with surface treatment by the electrode surface treatment device.

### Advantageous Effects

According to the present disclosure, the surface energy of the electrode foil is increased by performing surface treatment using plasma on the electrode foil to strengthen the adhesion between the electrode foil and the electrode mixture, and as a result, the quality of the electrode can be improved.

In addition, among the electrode active material and the binder included in the electrode mixture, the amount of binder added for attachment to the electrode foil is reduced, and the amount of electrode active material is to be increased in proportion to the reduced amount of binder, thereby increasing the capacity and energy density of the electrode.

Additionally, since there is no need to use expensive primer foil to increase the adhesion of the electrode foil, it is possible to shorten the manufacturing time of the electrode and reduce manufacturing costs thereof.

In addition, since surface treatment using plasma is performed during the transfer of the electrode foil, it is not necessary to prepare a separate plasma treatment space, and it is possible to secure continuity of the dry manufacturing process and further shorten the manufacturing time.

In addition, plasma is sprayed onto a portion of the electrode foil that is in contact with and supported by the guide roll, thereby preventing deformation or damage such as creases or wrinkles of the electrode foil due to the spray pressure of the plasma and increasing the yield of good products.

In addition, since the electrode surface treatment device according to the present disclosure performs surface treatment of the electrode foil before the coating process for the electrode foil, it can be applied, regardless of the coating method of the electrode, to the dry electrode manufacturing process as well as the wet electrode manufacturing process, thereby improving the quality of the electrode.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a diagram illustrating an electrode surface treatment device according to an embodiment of the present disclosure.
FIG. 2 is a diagram illustrating an electrode surface treatment device according to a modified embodiment of the present disclosure.
FIG. 3 is a diagram illustrating an electrode surface treatment device according to another modified embodiment of the present disclosure.
FIG. 4 is a diagram illustrating a guide roll of the electrode surface treatment device shown in FIG. 3.
FIG. 5 is a cross-sectional view of the guide roll taken along line S1-S1' in FIG. 4.
FIGS. 6 and 7 are diagrams illustrating the surface treatment effects of an electrode surface treatment device according to the present disclosure.
FIG. 8 is a block diagram illustrating an electrode coating system according to an embodiment of the present disclosure.
FIG. 9 is a diagram illustrating an electrode coating system according to an embodiment of the present disclosure.
FIG. 10 is a diagram illustrating an electrode coating system according to another embodiment of the present disclosure.

### BEST MODE

Hereinafter, embodiments according to the present disclosure will be described in detail with reference to the accompanying drawings to clarify solutions for the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

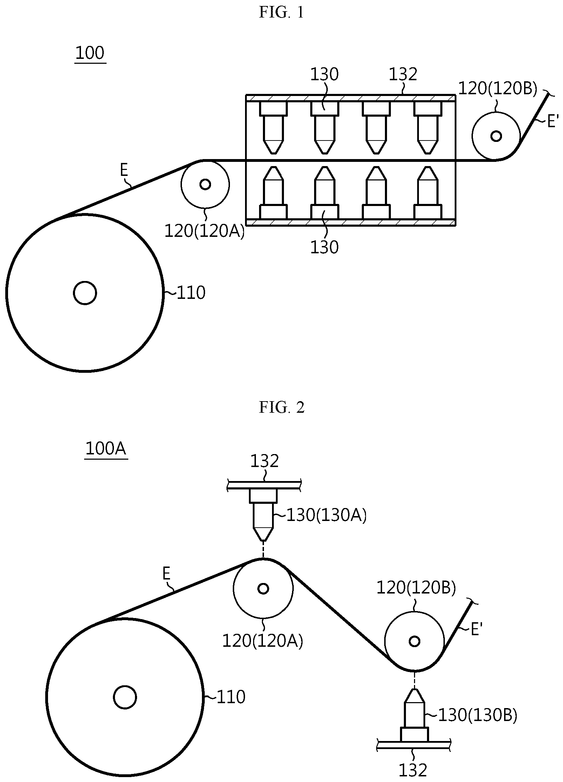

FIG. 1 shows an electrode surface treatment device 100 according to an embodiment of the present disclosure.

As shown in FIG. 1, the electrode surface treatment device 100 according to an embodiment of the present disclosure may include an unwinder 110, a guide roll 120, and a plasma unit 130.

The unwinder 110 is configured to unwind the electrode foil E wound in a roll to be moved in the longitudinal direction of the electrode foil E, i.e., the machine direction. The electrode foil E corresponds to a collector of an electrode, and may be made of any material as long as it has high conductivity without causing chemical changes in the secondary battery.

For example, the electrode foil E may be made of stainless steel, aluminum, nickel, titanium, baked carbon, copper, or aluminum or stainless steel having a surface treated with carbon, nickel, titanium, silver, or the like.

In particular, in the case where the electrode foil E corresponds to a collector of a positive electrode, the electrode foil E may be made of a material including aluminum. This electrode foil E may have a thickness ranging from 8*µ*m to 20*µ*m.

The guide roll 120 is configured to come into contact with the electrode foil E moving in the machine direction and support the electrode foil E, thereby guiding the movement of the electrode foil E.

In an embodiment, a plurality of guide rolls 120 may be provided. For example, the guide rolls 120 may include a first guide roll 120A that is in contact with the lower surface of the upper and lower surfaces of the electrode foil E and supports the electrode foil E, and a second guide roll 120B that is in contact with the upper surface of the electrode foil E and supports the electrode foil E.

The plasma unit 130 is configured to spray plasma onto the surface of the electrode foil E while the electrode foil E is moving, thereby performing surface treatment on the electrode foil E. To this end, the plasma unit 130 may include electrodes that generate high-voltage arc to produce plasma, a gas inlet to provide gas between the electrodes, a nozzle that sprays plasma, and the like. This plasma unit 130 may be supported by a support structure 132.

The plasma sprayed from the plasma unit 130 is a collection of particles including electrons with a negative charge and ions with a positive charge. This plasma has a fairly high degree of charge separation and has overall the same number of negative and positive charges, remaining in an electrically neutral state.

In an embodiment, the electrode surface treatment device 100 may include a plurality of plasma units 130. In this case, the plurality of plasma units may be arranged in the machine direction, which is the longitudinal direction of the electrode foil E, in the transverse direction, which is the width direction of the electrode foil E, or in both the machine and transverse directions, and may spray plasma onto the surface of the electrode foil E.

In general, foreign substances such as rolling oil remain on the surface of the electrode foil E manufactured by a rolling process. Therefore, the electrode surface treatment device according to the present disclosure may perform surface treatment on the electrode foil E using plasma to remove foreign substances, such as rolling oil, remaining on the surface of the electrode foil E and increase the surface energy of the electrode foil E.

As will be explained again below, the surface-treated electrode foil E' may be transferred to a coating device (not shown) configured to form a coating layer including an electrode active material on the surface of the electrode foil E'.

FIG. 2 is a diagram illustrating an electrode surface treatment device 100A according to a modified embodiment of the present disclosure.

As shown in FIG. 2, the electrode surface treatment device 100A according to a modified embodiment of the present disclosure, like the electrode surface treatment device 100 shown in FIG. 1, includes an unwinder 110, a guide roll 120, and a plasma unit 130. The electrode surface treatment device 100A is different from the electrode surface treatment device 100 shown in FIG. 1 in the arrangement of the plasma unit 130 and the plasma spray method.

That is, as explained with reference to FIG. 1, the unwinder 110 is configured to unwind the electrode foil E wound in a roll to be moved in the machine direction, i.e., the longitudinal direction of the electrode foil E.

The guide roll 120 is configured to come into contact with the electrode foil E moving in the machine direction and support the electrode foil E, thereby guiding the movement of the electrode foil E.

The plasma unit 130 is configured to continuously spray plasma onto the surface of the electrode foil E while the electrode foil E is moving, thereby performing surface treatment on the electrode foil E. This plasma unit 130 may be supported by a support structure 132.

In particular, unlike the electrode surface treatment device 100 in FIG. 1, the plasma unit 130 of the electrode surface treatment device 100A may be configured to spray plasma onto a portion of the electrode foil E, which is in contact with and supported by the guide roll 120, thereby performing surface treatment.

As a result, the tension of the electrode foil E may be maintained while the plasma is being sprayed, thereby preventing deformation or damage to the electrode foil such as creases, wrinkles, or the like due to the spray pressure of the plasma and improving the yield of good products.

In an embodiment, the electrode surface treatment device 100A may include a plurality of plasma units 130. In this case, the plurality of plasma units may be arranged in the transverse direction, i.e., the width direction of the electrode foil E, to spray plasma across the entire width of the electrode foil E.

Additionally, in an embodiment, the electrode surface treatment device 100A may include a plurality of guide rolls 120. In this case, the plurality of guide rolls may include a first guide roll 120A that is in contact with the lower surface of the upper and lower surfaces of the electrode foil E and supports the electrode foil E, and a second guide roll 120B that is in contact with the upper surface of the electrode foil E and supports the electrode foil E.

In this case, the plurality of plasma units may include at least one first plasma unit 130A that sprays plasma onto a first portion of the electrode foil E, which is in contact with and supported by the first guide roll 120A, and at least one second plasma unit 130B that sprays plasma onto a second portion of the electrode foil E, which is in contact with and supported by the second guide roll 120B.

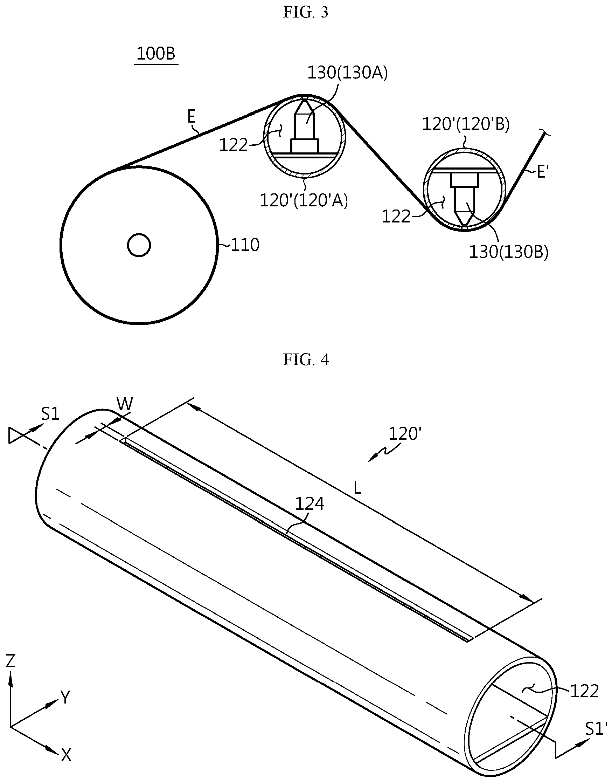

FIG. 3 illustrates an electrode surface treatment device 100B according to another modified embodiment of the present disclosure.

As shown in FIG. 3, the electrode surface treatment device 100B according to another modified embodiment of the present disclosure, like the electrode surface treatment device 100 shown in FIG. 1, may include an unwinder 110, a guide roll 120', and a plasma unit 130. The electrode surface treatment device 100B is different from the electrode surface treatment device 100 shown in FIG. 1 in the structure of the guide roll 120', the arrangement of the plasma unit 130, and the plasma spray method.

That is, as explained with reference to FIG. 1, the unwinder 110 is configured to unwind the electrode foil E wound in a roll to be moved in the machine direction, i.e., the longitudinal direction of the electrode foil E.

The guide roll 120' is configured to come into contact with the electrode foil E moving in the machine direction and support the electrode foil E, thereby guiding the movement of the electrode foil E.

In particular, unlike the electrode surface treatment device 100 in FIG. 1, the guide roll 120' of the electrode surface treatment device 100B is configured to have a hollow 122 therein. Additionally, the guide roll 120' may have a through-hole 124 provided on the outer surface thereof to communicate with the hollow 122.

In this case, the through-hole 124 may extend in the transverse direction, i.e., the width direction of the electrode foil E, in the form of a long hole, slit, or notch having a predetermined width W. The extension length L of the through-hole 124 extending in the transverse direction as described above may be less than the width of the electrode foil E to be subjected to surface treatment.

The plasma unit 130 is configured to perform surface treatment by continuously spraying plasma onto the surface of the electrode foil E while the electrode foil E is moving.

In particular, unlike the electrode surface treatment device 100 in FIG. 1, the plasma unit 130 of the electrode surface treatment device 100B may be configured to spray plasma onto a portion of the electrode foil E, which is in contact with and supported by the guide roll 120', thereby performing surface treatment.

In addition, the plasma unit 130 may be configured to be disposed in the hollow of the guide roll 120' and supported by the guide roll 120'. In this case, the plasma unit 130 may spray plasma onto the surface of the electrode foil E through the through-hole 124 of the guide roll 120'. To this end, the guide roll 120' is fixed at a certain posture, unlike a typical roll that rotates around a rotation axis. The electrode foil E may be moved by sliding in contact with the outer surface of the guide roll 120' where the through-hole 124 is formed.

As described above, according to the present disclosure, the tension of the electrode foil E may be maintained while the plasma is being sprayed, thereby preventing deformation or damage to the electrode foil such as creases, wrinkles, or the like due to the spray pressure of the plasma and improving the yield of good products. Additionally, the space required for arrangement of the plasma unit may be reduced, and the support structure for supporting the plasma unit may be excluded.

In an embodiment, the electrode surface treatment device 100B may include a plurality of plasma units 130. In this case, the plurality of plasma units may be arranged in the transverse direction, i.e., the width direction of the electrode foil E, to spray plasma across the entire width of the electrode foil E.

In addition, in an embodiment, the electrode surface treatment device 100B may include a plurality of guide rolls 120'. In this case, the plurality of guide rolls may include a first guide roll 120'A that is in contact with the lower surface of the upper and lower surfaces of the electrode foil E and supports the electrode foil E, and a second guide roll 120'B that is in contact with the upper surface of the electrode foil E and supports the electrode foil E.

In this case, the plurality of plasma units may include at least one first plasma unit 130A disposed in a hollow of the first guide roll 120'A and at least one second plasma unit 130B disposed in a hollow of the second guide roll 120'B.

The at least one first plasma unit 130A may spray plasma onto a first portion of the electrode foil E, which is in contact with and supported by the first guide roll 120'A. In addition, the at least one second plasma unit 130B may spray plasma onto a second portion of the electrode foil E, which is in contact with and supported by the second guide roll 120'B.

FIG. 4 illustrates a guide roll 120' of the electrode surface treatment device 100B shown in FIG. 3.

As shown in FIG. 4, the guide roll 120' is configured to come into contact with the electrode foil E moving in the machine direction and support the electrode foil E, thereby guiding the movement of the electrode foil E. In particular, the guide roll 120' may have a hollow 122 therein and a through-hole 124 provided on the outer surface thereof.

The through-hole 124 may extend in the transverse direction (X-axis direction), i.e., the width direction of the electrode foil E, in the form of a long hole, slit, or notch having a predetermined width W. In this case, the extension length L of the through-hole 124 may be less than the width of the electrode foil E to be subjected to surface treatment.

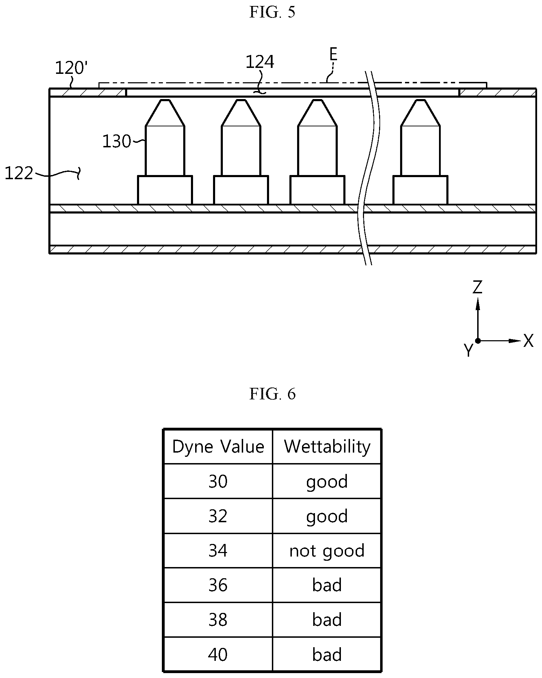

FIG. 5 illustrates a cross-sectional view of the guide roll 120' taken along line S 1-S1' in FIG. 4.

As shown in FIG. 5, a plurality of plasma units 130 may be disposed in the hollow 122 of the guide roll 120'. In this case, the plurality of plasma units 130 may be arranged side by side in the transverse direction (X-axis direction). Additionally, the plasma spray nozzles of the respective plasma units 130 may be aligned with the through-hole 124 of the guide roll 120'.

The plasma units 130 disposed in the hollow 122 of the guide roll 120' as described above may spray plasma onto the surface of the electrode foil E through the through-hole 124 formed on the guide roll 120'.

Meanwhile, since the length of the through-hole 124 is less than the width of the electrode foil E, the upper opening of the through-hole 124 is completely covered by the electrode foil E. As a result, the internal space of the through-hole 124 is filled with air excited by plasma.

For example, a through-hole 124 may be formed on the outer surface of the guide roll 120' to have a depth of about 4 mm to 8 mm and a length less than the width of the electrode foil E, thereby providing a space connecting the plasma unit 130 and the electrode foil E. The above space provided between the plasma unit 130 and the electrode foil E serves as a kind of chamber that accommodates the plasma gas. As a result, plasma treatment may be performed uniformly on the entire surface of the electrode foil E facing the upper opening of the through-hole 124.

Meanwhile, low-temperature plasma is sprayed at high pressure for surface treatment using plasma so that the electrode foil E supported by the outer surface of the guide roll 120' may be pushed by the spray pressure of the plasma from bottom to top, thereby producing tension on the electrode foil E. Therefore, it is possible to prevent deformation or damage to the electrode foil such as creases, wrinkles, or the like due to plasma pressure and improve the yield of good products.

As will be explained again below, the electrode foil E' whose surface has been treated with plasma as described above may be transferred to a coating device that performs a coating process.

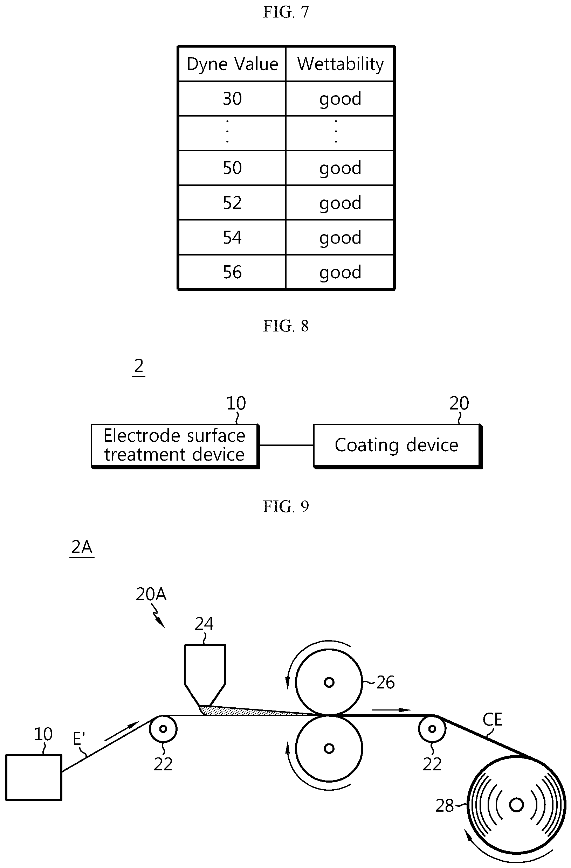

FIGS. 6 and 7 illustrate the surface treatment effects according to the present disclosure.

As shown in FIGS. 6 and 7, a surface energy measurement test using Dyne ink was performed to analyze the effects of surface treatment according to the present disclosure. In this test, aluminum electrode foils of the same thickness were used.

First, as shown in FIG. 6, if Dyne ink of 30[dyn] or 32[dyn] is applied onto the surface of aluminum electrode foil before surface treatment, wettability is relatively good. However, it can be seen that wettability significantly deteriorates if Dyne ink of 34[dyn] or more is applied.

On the other hand, as shown in FIG. 7, if Dyne ink is applied onto the surface of aluminum electrode foil processed by surface treatment using plasma according to the present disclosure, wettability is good up to 56[dyn]. That is, it can be seen that the surface energy of the aluminum electrode foil is significantly increased through surface treatment according to the present disclosure.

As described above, as the surface energy of the aluminum electrode foil increases, the adhesion between the electrode foil and the electrode mixture may be strengthened, thereby improving the quality of the electrode. In addition, among the electrode active material and the binder included in the electrode mixture, the amount of binder added to increase the adhesion is reduced, and the amount of electrode active material is to be increased in proportion to the reduced amount of binder, thereby increasing the electric capacity and energy density of the electrode. Additionally, since there is no need to use expensive primer foil to increase the adhesion of the electrode foil, it is possible to shorten the manufacturing time of the electrode and reduce manufacturing costs thereof.

FIG. 8 is a block diagram illustrating an electrode coating system 2 according to an embodiment of the present disclosure.

As shown in FIG. 8, the electrode coating system 2 according to an embodiment of the present disclosure may include an electrode surface treatment device 10 corresponding to any one of the electrode surface treatment devices 100, 100A, and 100B described above, and a coating device 20.

As described above, the electrode surface treatment device 10 may perform surface treatment on the electrode foil E using plasma and transfer the surface-treated electrode foil E' to the coating device 20.

The coating device 20 may be configured to form a coating layer on the surface of the surface-treated electrode foil E' by applying various types of coating processes. For example, the coating device 20 may form a coating layer on the surface of the corresponding electrode foil E' by applying a dry coating process or a wet coating process.

FIG. 9 illustrates an electrode coating system 2A according to an embodiment of the present disclosure.

As shown in FIG. 9, the electrode coating system 2A according to an embodiment of the present disclosure may include an electrode surface treatment device 10 corresponding to any one of the electrode surface treatment devices 100, 100A, and 100B described above, and a coating device 20A.

As described above, the electrode surface treatment device 10 may perform surface treatment on the electrode foil E using plasma and transfer the surface-treated electrode foil E' to the coating device 20A.

The coating device 20A may be configured to form a coating layer on the surface of the surface-treated electrode foil E' by applying a dry coating process. To this end, the coating device 20A may include a transfer roller 22 that transfers the electrode foil E', a feeder 24 that supplies a powdery electrode mixture including an electrode active material to the surface of the electrode foil E', a press roller 26 that presses the electrode mixture onto the surface of the electrode foil E', and a rewinder 28 that winds the coated electrode CE into a roll shape.

Meanwhile, the electrode mixture used to manufacture dry electrodes may include an electrode active material and a polymer binder, and may further include conductive materials, fillers, or the like, depending on the embodiment.

The electrode active material may be configured as a positive electrode active material or a negative electrode active material depending on the polarity of the dry electrode to be manufactured.

The positive electrode active material may include: lithium transition metal oxide; lithium metal iron phosphate; lithium-nickel-manganese-cobalt oxide; oxide in which lithium-nickel-manganese-cobalt oxide is partially substituted with another transition metal; or two or more of them, but is not limited thereto. For example, the positive electrode active material may be: layered compound such as lithium-cobalt oxide (LiCoO₂), lithium-nickel oxide (LiNiO₂), or the like, or compound substituted with one or more transition metals; lithium-manganese oxide with the formula of Li₁₊ₓMn₂₋ₓO₄ (where, x is 0 to 0.33), LiMnO₃, LiMn₂O₃, LiMnO₂, or the like; lithium-copper oxide (Li₂CuO₂); vanadium oxide such as LiVsOs, LiV₃O₄, V₂O₅, Cu₂V₂O₇, or the like; Ni site-type lithium-nickel oxide with the formula of LiNi₁₋ₓMₓO₂ (where, M = Co, Mn, Al, Cu, Fe, Mg, B, or Ga, and x = 0.01 to 0.3); lithium-manganese complex oxide with the formula of LiMn₂₋ₓMₓO₂ (where, M = Co, Ni, Fe, Cr, Zn, or Ta, and x = 0.01 to 0.1) or Li₂Mn₃MO₈ (where, M = Fe, Co, Ni, Cu, or Zn); lithium-metal phosphate LiMPO₄ (where, M = Fe, CO, Ni, or Mn); lithium-nickel-manganese-cobalt oxide Li₁₊ₓ(NiₐCo_{b}Mn_{c})₁₋ₓO₂ (x = 0 to 0.03, a = 0.3 to 0.95, b = 0.01 to 0.35, c = 0.01 to 0.5, and a+b+c=1); lithium-nickel-manganese-cobalt oxide partially substituted with aluminum Liₐ[Ni_{b}Co_{c}Mn_{d}Alₑ]_{1-f}M1_{f}O₂ (M1 is at least one selected from the group consisting of Zr, B, W, Mg, Ce, Hf, Ta, La, Ti, Sr, Ba, F, P, and S, 0.8≤a≤1.2, 0.5≤b≤0.99, 0<c<0.5, 0<d<0.5, 0.01≤e≤0.1, and 0≤f≤0.1); lithium-nickel-manganese-cobalt oxide partially substituted with another transition metal Li₁₊ₓ(NiₐCo_{b}Mn_{c}M_{d})₁₋ₓO₂ (x = 0 to 0.03, a = 0.3 to 0.95, b = 0.01 to 0.35, c = 0.01 to 0.5, d = 0.001 to 0.03, a+b+c+d=1, and M is any one selected from the group consisting of Fe, V, Cr, Ti, W, Ta, Mg, and Mo); disulfide compound; or Fe₂(MoO₄)₃, but is not limited thereto.

For example, the negative electrode active material may include: carbon such as non-graphitizable carbon, graphitic carbon, or the like; metal complex oxide such as LiₓFe₂O₃ (0≤x≤1), LiₓWO₂ (0≤x≤1), SnₓMe₁₋ₓMe'_{y}O_{z} (Me = Mn, Fe, Pb, or Ge, Me' = Al, B, P, Si, an element of Groups 1, 2, and 3 in the periodic table, or halogen, 0≤x≤1, 1≤y≤3, and 1≤z≤8), or the like; lithium metal; lithium alloy; silicon-based alloy; tin-based alloy; silicon-based oxide such as SiO, SiO/C, SiO₂, or the like; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; Li-Co-Ni-based materials; or two or more of them, but is not limited thereto.

The polymer binder may include PTFE (polytetrafluoroethylene), polyolefin, or mixtures thereof. For example, the binder polymer may contain PTFE of 60 wt% or more with respect to the total weight. In this case, the binder polymer may further include one or more of PEO (polyethylene oxide), PVdF (polyvinylidene fluoride), PVdF-HFP (polyvinylidene fluoride-cohexafluoropropylene), and polyolefin-based polymer.

The conductive material may include a material with conductivity without causing chemical changes in the secondary battery. For example, the conductive material may include: graphite such as natural graphite or artificial graphite; carbon black such as carbon black, acetylene black, Ketj enblack, channel black, furnace black, lamp black, summer black, or the like; conductive fiber such as carbon fiber or metal fiber; metal powder such as fluorinated carbon, aluminum, nickel powder, or the like; conductive whiskey such as zinc oxide, potassium titanate, or the like; conductive metal oxide such as titanium oxide or the like; conductive materials such as polyphenylene derivatives or the like; or two or more thereof. The conductive material may include one or more selected from the group consisting of activated carbon, graphite, carbon black, and carbon nanotubes for uniform mixing and improvement of conductivity. Meanwhile, since linear conductive materials such as carbon fiber and the like have a difficulty in obtaining high dispersion in consideration of the manufacturing process of the electrode mixture for electrodes, they may be minimally included or not included in the powder.

The filler is a component that suppresses expansion of the electrode, and may include a fibrous material that does not cause chemical changes in the secondary battery. For example, the filler may include: olefin-based polymer such as polyethylene, polypropylene, or the like; or fibrous materials such as glass fiber, carbon fiber, or the like; or two or more thereof.

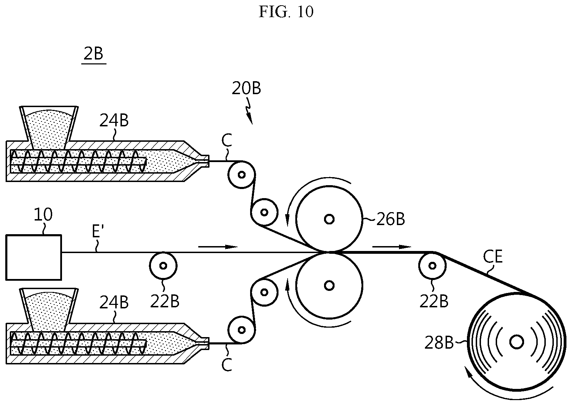

FIG. 10 illustrates an electrode coating system 2B according to another embodiment of the present disclosure.

As shown in FIG. 10, the electrode coating system 2B according to another embodiment of the present disclosure may include an electrode surface treatment device 10 corresponding to any one of the electrode surface treatment devices 100, 100A, and 100B described above, and a coating device 20B.

As described above, the electrode surface treatment device 10 may perform surface treatment on the electrode foil E using plasma and transfer the surface-treated electrode foil E' to the coating device 20B.

The coating device 20B may be configured to form a coating layer on the surface of the surface-treated electrode foil E' by applying a dry coating process.

To this end, the coating device 20B may include a transfer roller 22B that transfers the electrode foil E', an extruder 24B that produces an electrode film C for coating by compressing or extruding the powdery electrode mixture including the electrode active material, a laminating roller 26B that presses the electrode film onto the surface of the electrode foil E', and a rewinder 28B that winds the coated electrode CE into a roll shape.

Meanwhile, although FIG. 10 shows that the electrode film is produced by the extruder 24B, this electrode film may also be produced by compressing a powdery electrode mixture using a plurality of calender rollers.

As described above, according to the present disclosure, the surface energy of the electrode foil may be increased by performing surface treatment using plasma on the electrode foil to strengthen the adhesion between the electrode foil and the electrode mixture, thereby improving the quality of the electrode.

In addition, among the electrode active material and the binder included in the electrode mixture, the amount of binder added for attachment to the electrode foil is reduced, and the amount of electrode active material is to be increased in proportion to the reduced amount of binder, thereby increasing the capacity and energy density of the electrode.

Additionally, since there is no need to use expensive primer foil to increase the adhesion of the electrode foil, it is possible to shorten the manufacturing time of the electrode and reduce manufacturing costs thereof.

In addition, since surface treatment using plasma is performed during the transfer of the electrode foil, it is not necessary to prepare a separate plasma treatment space, and it is possible to secure continuity of the dry manufacturing process and further shorten the manufacturing time.

In addition, plasma may be sprayed onto a portion of the electrode foil that is in contact with and supported by the guide roll, thereby preventing deformation or damage such as creases or wrinkles of the electrode foil due to the spray pressure of the plasma and increasing the yield of good products.

In addition, since the electrode surface treatment device according to the present disclosure performs surface treatment of the electrode foil before the coating process for the electrode foil, it can be applied, regardless of the coating method of the electrode, to the dry electrode manufacturing process as well as the wet electrode manufacturing process, thereby improving the quality of the electrode.

Furthermore, the embodiments according to the present disclosure may also solve various other technical problems other than those mentioned in this specification in the related technical fields, as well as the relevant technical field.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

## Claims

1. An electrode surface treatment device comprising:
a guide roll configured to come into contact with and support an electrode foil moving in a machine direction, thereby guiding movement of the electrode foil; and
a plasma unit configured to perform surface treatment on the electrode foil by spraying plasma onto the electrode foil while the electrode foil is being moved.

2. The electrode surface treatment device according to claim 1,
wherein the plasma unit is configured to spray plasma onto a portion of the electrode foil, which is in contact with and supported by the guide roll.

3. The electrode surface treatment device according to claim 1,
wherein a plurality of plasma units is provided, and
wherein the plurality of plasma units is configured to be arranged in a transverse direction and to spray plasma onto the electrode foil, respectively.

4. The electrode surface treatment device according to claim 1,
wherein a plurality of guide rolls is provided, and
wherein the plurality of guide rolls comprises:
a first guide roll that is in contact with the lower surface of the upper and lower surfaces of the electrode foil and supports the electrode foil; and
a second guide roll that is in contact with the upper surface of the electrode foil and supports the electrode foil.

5. The electrode surface treatment device according to claim 4,
wherein a plurality of plasma units is provided, and
wherein the plurality of plasma units comprises:
at least one first plasma unit configured to spray plasma onto a first portion of the electrode foil, which is in contact with and supported by the first guide roll; and
at least one second plasma unit configured to spray plasma onto a second portion of the electrode foil, which is in contact with and supported by the second guide roll.

6. The electrode surface treatment device according to claim 1,
wherein the guide roll has a hollow therein, and
wherein the plasma unit is disposed in the hollow of the guide roll.

7. The electrode surface treatment device according to claim 6,
wherein the guide roll has a through-hole provided on an outer surface of the guide roll to communicate with the hollow, and
wherein the plasma unit is configured to spray plasma onto a surface of the electrode foil through the through-hole.

8. The electrode surface treatment device according to claim 7,
wherein the through-hole is configured in the form of a long hole or slit that extends in a transverse direction and has a predetermined width.

9. The electrode surface treatment device according to claim 8,
wherein an extension length of the through-hole extending in the transverse direction is less than a width of the electrode foil.

10. The electrode surface treatment device according to claim 6,
wherein a plurality of the guide rolls and a plurality of plasma units are respectively provided,
wherein at least one first plasma unit among the plurality of plasma units is disposed in a hollow of a first guide roll among the plurality of guide rolls, and
wherein at least one second plasma unit among the plurality of plasma units is disposed in a hollow of a second guide roll among the plurality of guide rolls.

11. The electrode surface treatment device according to claim 1,
further comprising an unwinder configured to unwind the electrode foil wound in a roll to be moved in the machine direction,
wherein the guide roll is configured to guide the electrode foil moved by the unwinder.

12. The electrode surface treatment device according to claim 1, wherein the electrode foil is made of a material including aluminum.

13. An electrode coating system comprising:
the electrode surface treatment device according to any one of claims 1 to 12; and
a coating device configured to form a coating layer on a surface of the electrode foil processed with surface treatment by the electrode surface treatment device.
